**Europäisches Patentamt**

**European Patent Office**

**Office européen des brevets**

(19)

(11) Veröffentlichungsnummer: **0 029 118**
**B1**

(12) # EUROPÄISCHE PATENTSCHRIFT

(45) Veröffentlichungstag der Patentschrift:
**18.07.84**

(21) Anmeldenummer: **80106159.9**

(22) Anmeldetag: **10.10.80**

(51) Int. Cl.³: **F 16 B 3/04,** F 16 J 13/08,
F 16 L 37/14, G 21 C 13/06

(54) Vorrichtung zum gasdichten Festlegen eines runden Deckels oder Flanschringes in einer korrespondierenden Öffnung.

(30) Priorität: **15.11.79 DE 2946107**

(43) Veröffentlichungstag der Anmeldung:
**27.05.81 Patentblatt 81/21**

(45) Bekanntmachung des Hinweises auf die Patenterteilung:
**18.07.84 Patentblatt 84/29**

(84) Benannte Vertragsstaaten:
**BE CH DE FR GB LI NL**

(56) Entgegenhaltungen:
**DE - A - 1 514 132**
**FR - A - 2 118 637**
**FR - A - 2 300 247**

(73) Patentinhaber: **Kernforschungszentrum Karlsruhe GmbH, Weberstrasse 5, D-7500 Karlsruhe 1 (DE)**

(72) Erfinder: **Böhme, Georg, Mittelweg 32,**
**D-7504 Weingarten (DE)**
Erfinder: **Selig, Manfred, Pfinzstrasse 15,**
**D-7514 Leopoldshafen (DE)**
Erfinder: **Trettin, Manfred, Eugen-Richter-Strasse 157,**
**D-7500 Karlsruhe (DE)**

## Beschreibung

Die vorliegende Erfindung betrifft eine Vorrichtung zum gasdichten Festlegen eines runden Deckels oder Flanschringes in einer korrespondierenden Öffnung mittels einer am Außenrand des Deckels umlaufenden Nut, in welche Sperrelemente zum Festhalten des Deckels eingreifen, die gleichzeitig in einer in der Öffnung umlaufenden Nut sitzen, wobei die Sperrelemente aus hintereinander auf ein flexibles Seil bzw. Band aufgefädelten Einzelkörpern bestehen, die im verriegelten Zustand beide Nuten formschlüssig miteinander verbinden und in der Stirnfläche des Deckels gegenüber der in der Öffnung umlaufenden Dichtlippe eine Dichtung angebracht ist.

In Anlagen der Kerntechnik ist oftmals ein gasdichtes Andrücken eines kreisrunden Deckels, insbesondere eines sogenannten Doppeldeckels oder Flanschringes in einer korrespondierenden Öffnung mittels öffnungsseitig montierter Schnellbetätigung notwendig. Dies erfolgt seither durch jeweils mehrere auf dem Umfang verteilte Riegel, Vorreiber oder Flanschschrauben, gelegentlich auch durch die Öffnung umschlingende V-Bänder, Ketten oder geteilte V-Ringe.

Dabei ist jedoch die parallele Betätigung der Riegel etc. durch einen gemeinsamen Antrieb technisch schwierig und aufwendig. Ungleichmäßigkeiten im Sitz oder Fertigungstoleranzen verschiedener Deckel- und Flanschringe sind unvermeidbar und können nur umständlich ausgeglichen werden. Umschlingende Bänder etc. sind kompliziert geformt und nicht durch einfaches Öffnen des Spannverschlusses so spreizbar, daß Deckel oder Ring zum Einsetzen bzw. Herausnehmen voll freigegeben werden.

Aus der FR-PS 23 00 247 ist eine Vorrichtung bekannt, bei der die Sperrelemente hintereinander auf einen dünnen Faden aufgefädelt sind. Dieser Faden hängt aus der Einfüllöffnung für die Sperrelemente heraus und dient zum Entfernen derselben bei der Demontage. Druckkräfte auf die Spannkörper lassen sich jedoch mit dem Faden nicht ausüben, würden solche auf die Spannkörper in eine größere Nut ausgeübt, so würden diese einander unbeeinflußt ausweichen.

Weiterhin ist in der DE-OS 15 14 132 die Verriegelungseinrichtung eines Deckels beschrieben, die aus einem, in eine Nut eingreifenden Spreizring besteht. Dieses, von den herkömmlichen Sicherungsringen her bekannte Prinzip bildet den Ausgangspunkte der vorliegenden Erfindung. Nachteilig sind für eine schnelle Handhabung dabei jedoch zum einen die umständliche Bedienbarkeit und zum anderen die mangelnde Flexibilität der Spannringe, wodurch sich keine exakte axiale Anpreßkraft erzielen läßt. Eine vollständige Freigabe der Öffnung wäre zudem nur mit sehr hohem Kraftaufwand möglich.

Die Aufgabe der vorliegenden Erfindung ist es nun, eine Vorrichtung der eingangs angegebenen Art zu schaffen, die eine schnell betätigbare dichte Verriegelung eines Flanschringes z. B. in einer Froschmanndoppeldeckelschleuse oder ähnlicher Einrichtung ermöglicht.

Zur Lösung dieser Aufgabe schlägt die hier vorliegende Erfindung vor, daß die als Sperrelemente wirkenden Einzelkörper Rohrstücke oder Kugeln sind, deren Seil aus der Öffnungsnut tangential zu einer Spannvorrichtung ausläuft, mittels welcher es durch Auf- bzw. Abwickeln spann- bzw. verkürzbar ist, wobei durch das Verkürzen das Seil mit den Rohrstücken bezogen auf deren Querschnitt etwa hälftig in die Deckelnut einschiebbar ist, deren eine Seitenfläche, an der die Rohrstücke anlaufen, zum Nutgrund hin leicht ansteigt, wodurch die Rohrstücke eine axial zum Deckel bzw. senkrecht zur Umfangsspannung gerichtete Kraft auf den Deckel zu seiner Anpressung an die Dichtlippe ausüben. Dabei ist die axiale Anpressung ein wesentlicher vorteilhafter Gesichtspunkt der neuen Vorrichtung, denn es soll ja der zu montierende Deckel oder Flansch gleichzeitig mit dem Befestigen auch gasdicht angepreßt werden.

Durch die Verwendung eines Spannbandes mit kreisförmigem Querschnitt, bestehend aus Drahtseil und aufgefädelten Rohrstücken zum axialen Anpressen von Ringen und Deckeln an runde oder ovale Öffnungen durch radiale Bewegung, die durch tangentiales Ziehen bewirkt wird, wird gemäß der vorliegenden Erfindung eine besonders vorteilhafte Spanneinrichtung geschaffen. Diese zeichnet sich durch leichte Herstellbarkeit, Verwendung handelsüblicher Maschinenelemente, vollständige Schließ- und Öffnungsfunktion sowie eine sehr einfache Betätigung durch einen normalen Hebel aus.

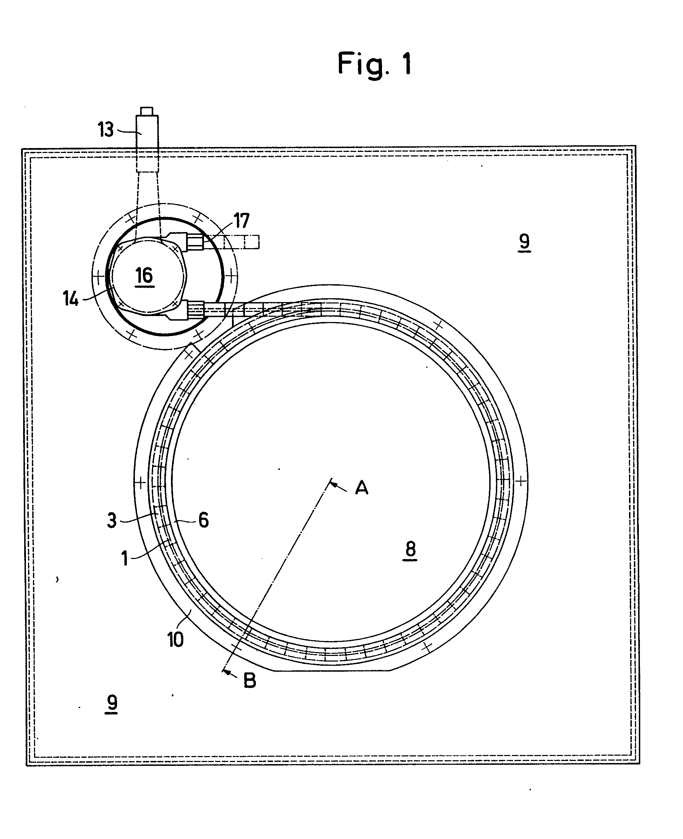

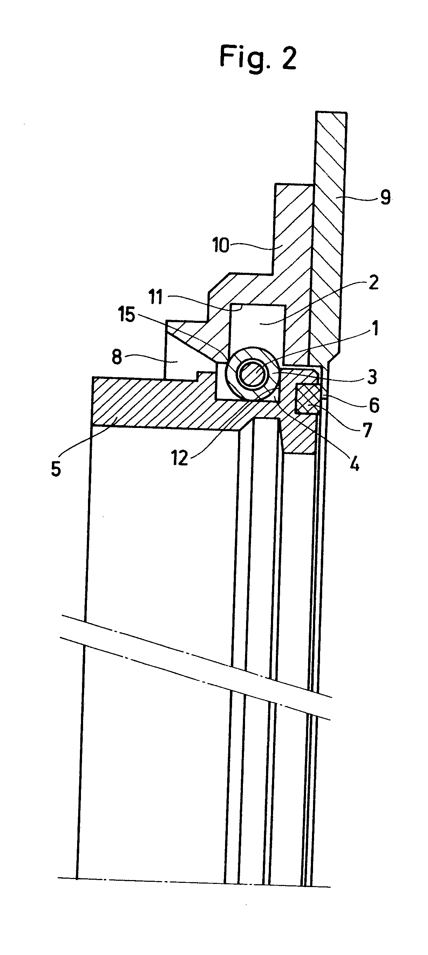

Weitere Einzelheiten der vorliegenden Erfindung werden im folgenden anhand der Fig. 1 und 2 näher erläutert. Die

Fig. 1 zeigt eine Öffnung in der Wandung eines Behälters, in die von der Betrachterseite her der festzulegende Stutzen eingesetzt wird und die

Fig. 2 einen Schnitt entlang der Linie a), b) der Fig. 1 mit zusätzlich eingezeichnetem Deckel in verspanntem Zustand.

Gemäß der Fig. 2 ist ein Flanschring oder Deckel 5 in der Öffnung 8 einer Wand 9 gasdicht zu befestigen. An die Wand 9 ist ein Ring 10 über die Öffnung 8 gasdicht geschraubt, der an seinem inneren Umfang eine umlaufende Nut aufweist.

In diese Nut ist nun ein besonderes Spannelement in Form eines Stahlseiles 1 oder -bandes gelegt, auf welchem beweglich hintereinanderliegend, Rohrabschnitte 3 oder Kugeln aufgefädelt sind. Im entspannten Zustand liegt das Seil 1 mit den Rohrabschnitten 3 vollständig in der Nut 2 am Nutgrund 11 an, da es durch eine in der Fig. 1 gezeigte Vorrichtung verlängert bzw. entspannt wird. In der in Fig. 2 gezeichneten Form ist es jedoch verkürzt bzw. gespannt und tritt damit radial nach innen aus der Nut 2 aus.

In die Öffnung 8 ist der festzulegende und abzudichtende Flanschring oder Deckel 5 eingeschoben, der eine umlaufende Nut 4 aufweist, die — in Einsetzrichtung gesehen — eine zum Nutgrund hin leicht ansteigende Anlauf- bzw. Nutseitenfläche 12 aufweisen kann. Das aus der Nut 2 bei Verkürzen nach innen ausrückende Seil 1 mit den Rohrabschnitten 3 wandert nun etwa hälftig bezogen auf seinen Durchmesser nach innen in die Nut 4 des Flanschringes 5 und drückt diesen durch Anlaufen an die Fläche 12 und Abstützen gegen die rückwärtige Kante 15 an der Öffnung der Nut 2 in Einsetzrichtung gegen die in der Öffnung 8 umlaufende Dichtlippe 6. Da der Flanschring 5 an dieser Stelle eine umlaufende Dichtung 7 aufweist, wird die Öffnung 8 gegen den Flanschring 5 hermetisch abgedichtet. Durch Abstimmen von Nutbreite und -tiefe im Verhältnis zur Einbringtiefe des Bandes kann nun die Einpreß- bzw. Dichtkraft vorgegeben und eingestellt werden.

Wird nun eine Spannvorrichtung für das Seil 1 oder Band verwendet, die selbsthemmend ist, so bleibt der Flanschring oder Deckel 5 in der Öffnung 8 fest verspannt und kann auf einfache Weise wieder gelöst werden.

Eine solche Spannvorrichtung zeigt die Fig. 1, wobei das Seil 1 im entspannten Zustand bzw. nach außen in die Nut 2 gedrückt ist. Die Spannvorrichtung besteht aus einem exzentrisch zur Öffnung 8 in der Wand 9 gelagerten Hebel 13, der mit einer Rolle 14 in das tangential aus den Nuten 2, 4 auslaufende Seil 1 angreift. Dieses ist auf der Rolle 14 befestigt und mit Hemmung in dem Rollengehäuse 16 geführt, so daß es durch Schwenken des Hebels 13 selbsthemmend in beiden Drehrichtungen ge- und entspannt bzw. von der Deckelnut 4 in die Öffnungsnut 2 und umgekehrt durch Ausdehnen und Verkürzen gedrückt werden kann. Die überschüssige Bandlänge kann dabei an der Stelle 17 aus dem Rollengehäuse 16 austreten. Dieses, sowie die Spanneinrichtung in Form des Ringes 10, sind an die Wand 9 angesetzt.

**Patentanspruch**

Vorrichtung zum gasdichten Festlegen eines runden Deckels (5) oder Flanschringes in einer korrespondierenden Öffnung (8) mittels einer am Außenrand des Deckels (5) umlaufenden Nut (4), in welche Sperrelemente zum Festhalten des Deckels (5) eingreifen, die gleichzeitig in einer in der Öffnung umlaufenden Nut (2) sitzen, wobei die Sperrelemente aus hintereinander auf ein flexibles Seil (1) bzw. Band aufgefädelten Einzelkörpern bestehen, die im verriegelten Zustand beide Nuten (2, 4) formschlüssig miteinander verbinden und in der Stirnfläche des Deckels (5) gegenüber der in der Öffnung (8) umlaufenden Dichtlippe (6) eine Dichtung (7) angebracht ist, dadurch gekennzeichnet, daß die als Sperrelemente wirkenden Einzelkörper Rohrabschnitte (3) oder Kugeln sind, deren Seil (1) aus der Öffnungsnut (2) tangential zu einer Spannvorrichtung (13, 14, 16) ausläuft, mittels welcher es durch Auf- bzw. Abwickeln spann- bzw. verkürzbar ist, wobei durch das Verkürzen das Seil (1) mit den Rohrabschnitten (3) bezogen auf deren Querschnitt etwa hälftig in die Deckelnut (4) einschiebbar ist, deren eine Seitenfläche (12), an der die Rohrabschnitte (3) anlaufen, zum Nutgrund hin leicht ansteigt, wodurch die Rohrabschnitte (3) eine axial zum Deckel (5) bzw. senkrecht zur Umfangsspannung gerichtete Kraft auf den Deckel (5) zu seiner Anpressung an die Dichtlippe (6) ausüben.

**Claim**

Apparatus for gastight installation of a round lid (5) or flanged ring into a corresponding aperture (8) by means of a groove (4) running around the external edge of the lid (5) into which groove retaining elements are engaged to hold the lid (5) which at the same time are placed in a groove (2) running around in the aperture, with the retaining elements consisting of single bodies threaded in series on a flexible rope (1) and tape, respectively, providing in the locked condition a self-closed interconnection of the two grooves (2, 4), with a seal (7) provided in the front face of the lid (5) opposite to the sealing lip (6) running around in the aperture (8), with the single bodies acting as retaining elements being tubular sections (3) or spheres with the rope (1) leaving the groove of the aperture (2) in the tangential direction with respect to a clamping device (13, 14, 16) by means of which it can be stretched or shortened by winding up or winding off, the rope (1) with the tubular sections (3) being insertable into the groove of the lid (4) by approximately half its length related to the cross section of the tubular sections, one of the grooves' lateral faces (12), where the tubular sections (3) end, slightly rising to the bottom of the groove so that the tubular sections (3) exert onto the lid (5) an axial force with respect to the lid (5) and a normal force, respectively, with respect to the hoop stress so as to press the lid (5) onto the sealing lip (6).

**Revendication**

Dispositif pour fixer de façon étanche aux gaz un couvercle rond (5) ou bien un anneau de bride, dans une ouverture correspondante (8) au moyen d'une rainure périphérique sur le bord extern du couvercle (5), rainure dans laquelle viennent en prise des éléments de retenue pour le maintien du couvercle (5), qui sont placés simultanément dans une rainure (2) périphérique dans l'ouverture, ces éléments de retenue étant constitués de structures individuelles enfilées sur un câble (1) ou une bande flexible, ces structures individuelles, à l'état verrouillé, reliant ensemble par interpénétration de forme les deux rainures (2, 4), tandis que sur la surface frontale du couvercle (5) en face de la lèvre d'étanchement (6) faisant le tour de l'ouverture (8) est rapporté un joint d'étanchéité (7), dispositif caractérisé en ce que les structures individuelles jouant le rôle d'éléments de retenue sont des tronçons de tubes (3) ou des billes, dont le câble (1) sort tangentiellement de la rainure (2) de l'ouverture en direction d'un dispositif tendeur (13, 14, 16) au moyen duquel de câble peut être détendu ou raccourci par déroulement ou enroulement, le câble (1) avec les tronçons de tubes (3) étant susceptible du fait du raccourcissement, de pénétrer sur environ la moitié de sa section transversale dans la rainure (4) du couvercle, dont une surface latérale (12), sur laquelle arrivent les tronçons de tubes (3), monte légèrement vers le fond de la rainure, grâce à quoi les tronçons de tubes (3) exercent sur le couvercle (5) pour l'appliquer sous pression contre la lèvre d'étanchement (6) un effort dirigé axialement par rapport à ce couvercle (5) ou bien perpendiculairement à la tension périphérique.

# Fig. 1

Fig. 2